# EUROPEAN PATENT APPLICATION

(11) **EP 4 488 414 A1**
(43) Date of publication of application: **08.01.2025**
(21) Application number: 23183062.1
(22) Date of filing: 03.07.2023
(51) Int. Cl.: C25B 1/04, C25B 11/077, C25B 1/042

(54) **A METHOD FOR TREATING AN OXIDE CATALYST MATERIAL, AN OXIDE CATALYST MATERIAL AND A USE OF THE OXIDE CATALYST MATERIAL**

(71) Applicant: OÜ Stargate Hydrogen Solutions, 11415 Tallinn (EE)
(72) Inventor: Küngas, Rainer, 11415 Tallinn (EE); Prits, Alise-Valentine, 11415 Tallinn (EE); Maide, Martin, 11415 Tallinn (EE)
(74) Representative: Moosedog Oy

(57) **Abstract**

A method for treating a raw oxide catalyst material with a perovskite (010) structure. The method comprises preparing a treatment container (110) comprising the oxide catalyst material with the perovskite structure and an alkaline treating solution (020), performing in the treatment container a hydrothermal treatment of the oxide catalyst material with the perovskite structure in the alkaline treating solution (210), obtaining a morphology-modified perovskite oxide catalyst material (310).

## Description

### TECHNICAL FIELD

The present disclosure relates generally to electrode materials and methods for treating the electrode materials and using the treated electrode materials.

### BACKGROUND

Oxygen Evolution Reaction (OER) and Hydrogen Evolution Reaction (HER) are key reactions in the water electrolysis process. In alkaline media, the OER proceeds as 4 OH⁻ = O₂ + 2 H₂O + 4e⁻, whereas HER proceeds as 4 H₂O + 4e⁻ = 2 Hz + 4 OH⁻. The sum of the two reactions results in 4 H₂O = O₂ + 2 Hz + 2 H₂O or simply 2 H₂O = O₂ + 2 Hz.

In industrial alkaline electrolysis cells, OER electrodes are either based on nickel or precious metals. Nickel-based electrodes are relatively low-cost, but are characterized by high overpotentials, resulting in high energy consumption of the cell, and, in turn, high production cost of hydrogen. In contrast, electrodes based on precious metals or their compounds (such as IrO₂, RuO₂, Pt) result in low overpotentials, but are very high in investment costs, resulting in high production cost of hydrogen.

Oxide catalyst materials are widely used in various industrial applications, such as chemical synthesis, energy conversion, and pollution control. Specifically, perovskite oxide catalyst materials have been identified as promising alternative to precious metal-based materials for carrying out OER and HER in alkaline media. However, the perovskite oxide materials have been shown to either suffer from stability issues (formation of secondary phases during operation, increased overpotentials) or from insufficient activity (too high overpotentials). A promising approach to overcoming these shortcomings is the development of surface treatments that allow to modify the already active electrode materials, and make them even more active. Ideally, the surface treatment also improves the material stability under operating conditions.

Therefore, to overcome these issues, there is a need for surface treatments to improve the performance and stability of anode and cathode materials.

### SUMMARY

The aim of the present disclosure is to improve the performance and stability of the anodes and cathodes under working conditions. More specifically, the aim is to improve the performance and stability of anodes and cathodes for use in alkaline water electrolysis, anion exchange membrane electrolysis or solid oxide electrolysis or solid oxide fuel cells. The aim of the disclosure is achieved by a method for treating an oxide catalyst material, an oxide catalyst material and a use of the oxide catalyst material as defined in the appended independent claims to which reference is made to. Advantageous features are set out in the appended dependent claims, which enable more efficient and durable electrochemical systems, benefiting various industries.

Additional advantages of the present disclosure are that the improved materials are low-cost, and result in low OER and HER overpotentials, and are stable under industrially relevant conditions (i.e., elevated temperature, concentrated alkali solutions for alkaline electrolysis). The present disclosure enables to provide more active and stable OER and HER electrodes in alkaline electrolysis, as well as provide more active and stable electrodes for use in solid oxide electrolysis cells and solid oxide fuel cells.

Additional aspects, advantages, features and objects of the present disclosure would be made apparent from the drawings and the detailed description of the illustrative embodiments construed in conjunction with the appended claims that follow.

### BRIEF DESCRIPTION OF THE DRAWINGS

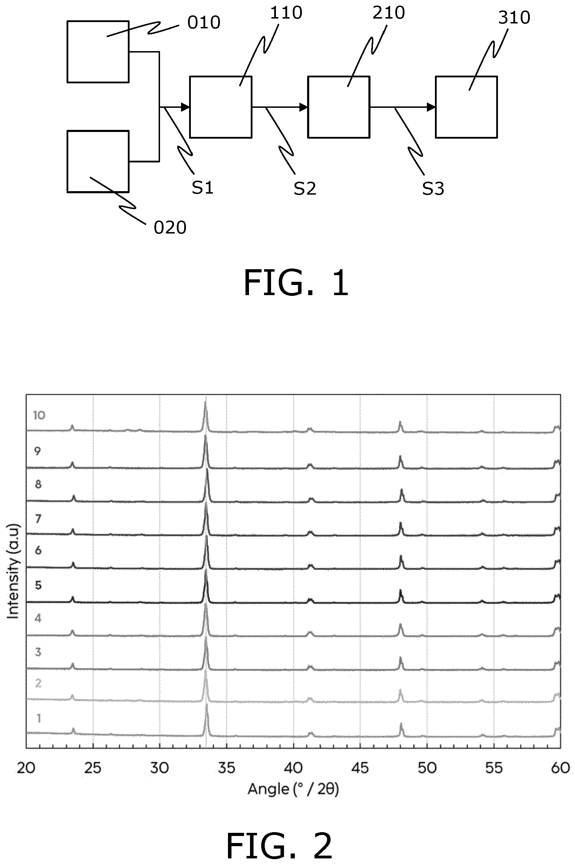

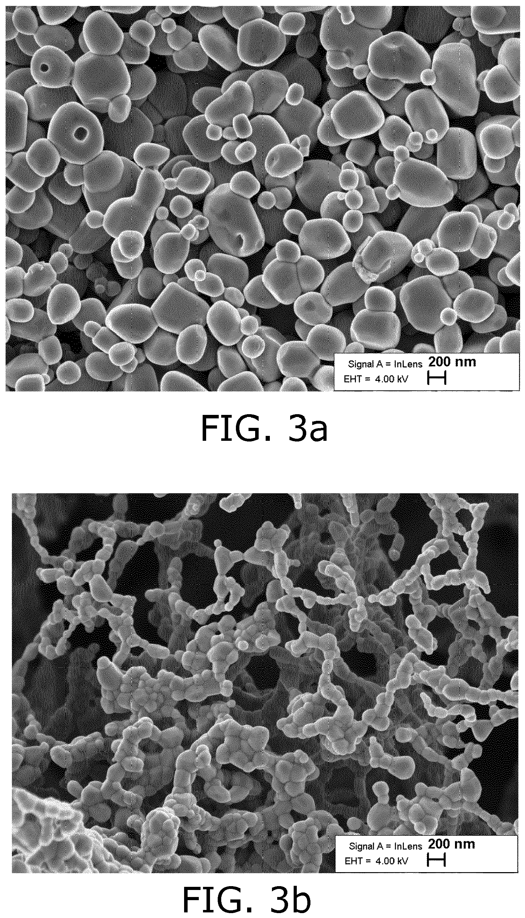

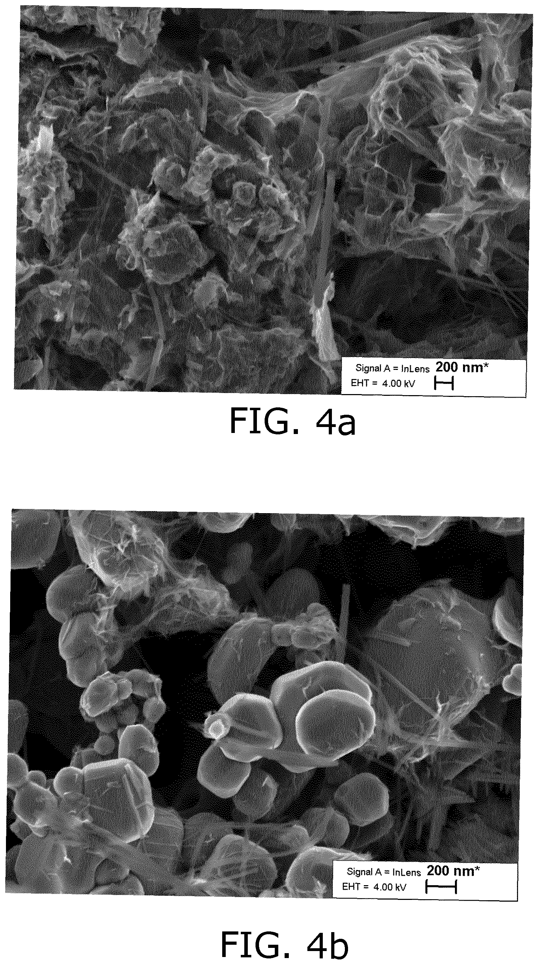

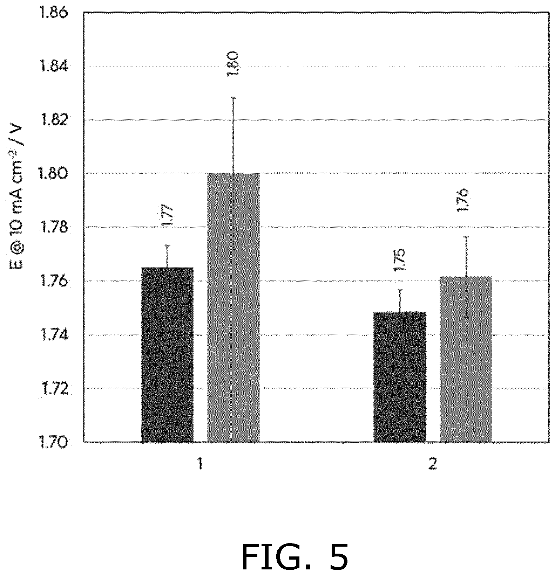

The summary above, as well as the following detailed description of illustrative embodiments, is better understood when read in conjunction with the appended drawings. For the purpose of illustrating the present disclosure, exemplary constructions of the embodiments of the disclosure are shown in the drawings, with references to the following diagrams wherein:
Figure FIG. 1 shows a block scheme of a method according to the present disclosure;
Figure FIG. 2 is a graph of X-Ray Diffraction (XRD) diffractograms illustrating the analysis of the crystallographic phase composition of the comparative example of perovskite oxide catalyst materials (CE-POCMs) and morphology-modified perovskite oxide catalyst materials (MM-POCMs) according to the present disclosure;
Figures FIG. 3a to FIG. 3c show the surface morphology of the comparative example of perovskite oxide catalyst materials (CE-POCMs), as measured by scanning electron microscopy;
Figures FIG. 4a to FIG. 4g show the surface morphologies of the morphology-modified perovskite oxide catalyst materials (MM-POCMs) according to the present disclosure, as measured by scanning electron microscopy;
Figure FIG. 5 shows the electrode potential of CE-POCM3 and MM-POCM10 under identical conditions after 1^{st} and 10^{th} measurement cycle, as measured by rotating disk electrode measurements.

### DETAILED DESCRIPTION OF EMBODIMENTS

The following detailed description illustrates embodiments of the present disclosure and ways in which they can be implemented.

In an aspect, an embodiment of the present disclosure provides a method for treating a raw oxide catalyst material with a perovskite structure, the method comprises preparing a treatment container comprising the oxide catalyst material with the perovskite structure and an alkaline treating solution, wherein a concentration of the alkaline treating solution is 5-45 wt%; performing in the treatment container a hydrothermal treatment of the oxide catalyst material with the perovskite structure in the alkaline treating solution at a temperature of 20-95 degrees Celsius for 0.02-112 hours; obtaining a morphology-modified perovskite oxide catalyst material (MM-POCM).

The method for treating the raw oxide catalyst material with a perovskite structure enables to obtain the morphology-modified perovskite oxide catalyst material for use in electrodes. The obtained morphology-modified perovskite oxide catalyst material (MM-POCM) enables improved performance and stability of anodes and cathodes for use in alkaline water electrolysis, anion exchange membrane electrolysis or solid oxide electrolysis or solid oxide fuel cells.

The raw oxide catalyst material with a perovskite structure may be synthesized before the treating, may be a by-product or waste product from another process or may be obtained from some other source. A stoichiometry of the raw oxide catalyst material with a perovskite structure (i.e., perovskite oxide catalyst material (POCM) may vary and have e.g., formulas such as ABO₃, A₂B₂O₅, or A₂B₂O₆, where A is an A-site of the perovskite, B is a B-site of the perovskite, and O is oxygen.

The treatment container can be container chemically resistant to the alkaline solution, e.g., a vacuum sealable bag, a smaller jar or vessel for processing the perovskite-based catalyst material, a larger container for treating the electrode components, such as anodes and cathodes, or a stacked assembly where the perovskite catalyst, electrodes, and other related components are already integrated and treated together. The treatment container may thus be formed inside an alkaline electrolysis cell, on an electrode for an alkaline electrolyser or in an alkaline electrolysis stack.

Preparing the treatment container comprising the POCM and an alkaline treating solution, wherein a concentration of the alkaline treating solution is 5-45 wt%. Preparing the treatment container comprises placing the POCM in a treatment container; filling the treatment container with the alkaline treating solution; sealing the treatment container in a pressure-tight manner. The treatment container needs to withstand the pressure that is formed inside the container during the hydrothermal treatment.

The concentration of the alkaline treating solution may be e.g., 5-45 wt%. The concentration of the alkaline treating solution may thus be from 5, 10, 15, 20, 25, 30, 35 or 40 up to 10, 15, 20, 25, 30, 35, 40 or 45 wt%. According to any of the embodiments, the alkaline treating solution may be a potassium hydroxide (KOH) solution in water or a sodium hydroxide (NaOH) solution in water.

Examples of the hydrothermal treatment conditions with alkaline treating solution, wherein the alkaline treating solution may be KOH or NaOH solution in water.

| Parameter | Examples | Working range |
|---|---|---|
| Treatment temperature | 80°C | Between room temperature and 95°C |
| Alkaline treating solution concentration used for the treatment | 6M (26.8%_{wt}) KOH, 6.9M (30%_{w}t) KOH | KOH concentrations higher than 6M (26.8%_{wt}), working the in case of KOH concentrations higher 6.9M (30%_{wt}) |
| Treatment time | 5h | Between 0.02h and 100h |
| Oxide catalyst material that received the alkaline treating solution treatment | PrCoO₃, LaCoO₃, (La_{0.9}Sr_{0.1})_{0.95}CoO₃ | Works for complex oxide catalyst materials similar to PrCoO₃, LaCoO₃ |

The hydrothermal treatment helps also to eliminate impurities, that might negatively affect the catalytic activity or stability of the MM-POCM. The hydrothermal process can be easily scaled up for large-scale production of perovskite materials, making it an attractive option for industrial applications. The temperature during the hydrothermal treatment of the POCM in the alkaline treating solution may be for example 20-95 degrees Celsius. The treating temperature may thus be from 20, 25, 30, 35, 40, 45, 50, 55, 60, 65, 70, 75, 80, 85 or 90 up to 25, 30, 35, 40, 45, 50, 55, 60, 65, 70, 75, 80, 85, 90 or 95 degrees Celsius.

The treatment time of the hydrothermal treatment of the POCM in the alkaline treating solution may be for example 0.02-112 hours. The treatment time may thus be from 0.02, 0.04, 0.06, 0.08, 0.1, 0.2, 0.3, 0.4, 0.5, 0.6, 0.7, 0.8, 0.9, 1, 5, 10, 15, 20, 25, 30, 35, 40, 45, 50, 55, 60, 65, 70, 75, 80, 85, 90, 95, 100, 105 or 110 up to 0.04, 0.06, 0.08, 0.1, 0.2, 0.3, 0.4, 0.5, 0.6, 0.7, 0.8, 0.9, 1, 5, 10, 15, 20, 25, 30, 35, 40, 45, 50, 55, 60, 65, 70, 75, 80, 85, 90, 95, 100, 105, 110 or 112 hours.

As a result of the treatment, the morphology of the particles is changed, the initial round particles transforming into elongated particles. During the treatment in alkaline solution, the properties of the material improve over time: the specific surface area of the material increases, the catalytic activity of the material improves, and the stability of the material improves. Elongated particles on the surface of the material make the material more stable. If the treatment is carried out for too long, the elongated particles begin to break down.

The hydrothermal treatment by obtaining elongated particles on the surface enables to activate the surface of the electrode material electrochemically towards OER. The treatments can be carried out in closed containers in hydrothermal conditions. E.g., the sample may be loaded into the treatment vessels at room temperature, where the density of 26.8 wt% KOH is 1.257 g/cm³. At 85 degrees C, the density of 26.8 wt% KOH decreases to 1.224 g/cm³, and the resulting volume expansion pressurizes the container to 1.03 atm. The pressure inside the alkaline solution treatment container may reach at least to 1.01 atmosphere (atm) or more.

In an example of the method according to the present disclosure the method may comprise following steps. The initial complex oxide material is weighed into a plastic tube. The plastic tube is filled up with alkaline treating solution (solution concentration between 5_{wt}% to 45_{wt}%, wherein the alkaline treating solution may be KOH solution in water or NaOH solution in water) and the tube closed. The mixture is thoroughly shaken or stirred to mix the alkaline treating solution and the raw perovskite oxide catalyst material. The mass ratio of the catalyst material and the alkaline treating solution is between 1:8 and 3:5. The plastic tube is placed into a plastic bag which is then vacuumized and sealed. The vacuum sealed bag filled with the oxide material and the alkaline treating solution forms the treatment container. The vacuum sealed bag is placed into a water bath which is heated to the desired treatment temperature (between room temperature and 95°C). The vacuum sealed bag is left in the water bath for the desired time (ranging from 0.02 h to 112 h). The vacuum sealed bag is opened. The top layer of alkaline treating solution is poured off from the sample. The catalyst material is rinsed out of the tube with water. The resulting mixture of catalyst material and water is collected into a plastic beaker. The solution is poured onto filter paper that is in turn placed onto a vacuum filtration device. The water is filtered out of the mixture with the vacuum filtration device. The mixture is rinsed with water several times until a neutral pH level 7 is reached. The pH level is identified with a pH paper strip. The material is left to dry in air covered with a filter paper overnight.

The hydrothermal treatment may additionally comprise heating the treatment container at a temperature of at least 85 degrees by Celsius, whereby the pressure inside the container reaches at least 1.01 atm. According to the embodiments, the heating may be carried out for 3-8 hours. By heating the treatment container with the POCM in alkaline solution to at least 85 degrees Celsius and allowing the pressure to reach at least 1.03 atm for 3-8 hours enables to accelerate the morphological transformation of the POCM. This enables faster treatment of the perovskite structure and thus, reduces the overall processing time. Such conditions also enable to improve the formation of a well-defined morphology with better crystallinity and fewer defects, which can improve the catalytic performance of the material in various applications according to the use of the MM-POCM according to the present disclosure. Such conditions further enable to control the morphology, particle size and shape, which have a significant impact on the overall surface area and catalytic activity and stability of the material.

The oxide catalyst material with perovskite structure comprises at least one rare-earth metal on an A-site of the perovskite structure and at least one transition metal on a B-site of the perovskite structure. More specifically, the rare-earth metal may be for example lanthanum or praseodymium and the transition metal may be nickel or cobalt or the transition metal is nickel and cobalt. I.e., in an example, the transition metal may also be a mixture of nickel and cobalt. Thus, for example, the oxide catalyst material with perovskite structure may comprise lanthanum on the A-site of the perovskite, and nickel on the B-site of the perovskite; or lanthanum on the A-site of the perovskite, and cobalt on the B-site of the perovskite; or praseodymium on the A-site of the perovskite, and nickel on the B-site of the perovskite; or praseodymium on the A-site of the perovskite, and cobalt on the B-site of the perovskite; or lanthanum on the A-site of the perovskite, and nickel and cobalt on the B-site of the perovskite; or praseodymium on the A-site of the perovskite, and nickel and cobalt on the B-site of the perovskite. The rare-earth metals lanthanum or praseodymium and the transition metals nickel or cobalt improve overall performance of the electrode materials by improving conductivity, stability, and electrochemical performance.

Optionally, the hydrothermal treatment may comprise agitating the oxide catalyst material with the perovskite structure in the alkaline treating solution with ultrasound. Sonicating in an ultrasonic bath may be continuous during heating. Ultrasonic mixing of the solution and the material helps to prevent the material from sedimenting at the bottom of the mixture.

In the method according to any of the embodiments, a mass ratio of the oxide catalyst material with perovskite structure and the alkaline treating solution is between 1:8 and 3:5. The mass ratio thus may be for example 1:3-2:3, 3:4-4:5, 2:5-3:5, 3:6-4:7, 4:9-5:9, 7:10-8:10, 4:7-5:8, 9:12-10:13, 5:8-6:9 or 11:15-12:17. Such mass ratio of strong alkalis, such as KOH or NaOH, are effective in hydrothermal synthesis of perovskite materials because of enhancing solubility. The increased solubility promotes uniform nucleation and crystal growth, leading to better control over the material's morphology. NaOH and KOH solutions also effectively enable to control the pH of the reaction mixture, which play a crucial role in determining the crystal structure, morphology, and particle size of perovskite materials. By adjusting the pH, it is possible to achieve the desired properties in the final product. The strong alkaline conditions provided by NaOH and KOH solutions can promote hydrolysis and condensation reactions of metal precursors, leading to the formation of perovskite structures. This can enhance the reaction kinetics and improve the crystallinity and phase purity of the final product. The strong alkaline environment enables to modify the surface properties of the MM-POCM particles, which can impact the catalyst's performance in various applications according to the use of the MM-POCM of the present disclosure.

In an embodiment, performing the hydrothermal treatment in the treatment container comprises performing the hydrothermal treatment inside an alkaline electrolysis cell, on an electrode for an alkaline electrolyser or in an alkaline electrolysis stack. In such embodiments the hydrothermal treatment provides surprisingly enhanced catalytic performance by modifying the surface properties the oxide catalyst material with perovskite structure, leading to improved catalytic activity and efficiency of the MM-POCM. This results in better performance of the alkaline electrolysis cell, with higher hydrogen production rates and lower energy consumption. Such hydrothermal treatment also improves the stability and durability of the MM-POCM, improves electrical conductivity and electrochemical activity of the MM-POCM, which improves the performance of the electrode in the alkaline electrolyser. A further advantage of the embodiment is that no further powder processing is required after the treatment is carried out: MM-POCM is formed on the surface of the electrodes inside the alkaline electrolysis stack.

In another aspect, an embodiment of the present disclosure provides a morphology-modified perovskite oxide catalyst material, wherein the morphology-modified perovskite oxide catalyst material comprises elongated nanoparticles; and wherein an average width of elongated nanoparticles is 52-77 nm, an average length of elongated nanoparticles is 641-901 nm, an average elongated nanoparticles 2D area is 35 000 - 84 000 square nanometres (nm²).

A number of elongated nanoparticles on a microscale SEM image depends on a density of the elongated nanoparticles on a spot from where the microscale SEM image has been taken. For example, per a 3.5 µm x 2.5 µm SEM micrograph the number of elongated nanoparticles may be 20-180. The more elongated nanoparticles the material comprises, the higher specific surface area is the material has. The elongated nanoparticles 2D area refers to two-dimensional (2D) surface area of elongated nanoparticles calculated from the SEM (scanning electron microscope) image. The average width of elongated nanoparticles of morphology-modified perovskite oxide catalyst material (MM-POCM) may thus be from 52, 53, 54, 55, 56, 57, 58, 59, 60, 61, 62, 63, 64, 65, 66, 67, 68, 69, 70, 71, 72, 73, 74, 75 or 76 nanometres (nm) up to 53, 54, 55, 56, 57, 58, 59, 60, 61, 62, 63, 64, 65, 66, 67, 68, 69, 70, 71, 72, 73, 74, 75, 76 or 77 nm. The average length of elongated nanoparticles of MM-POCM may thus be from 641, 651, 661, 671, 681, 691, 701, 711, 721, 731, 741, 751, 761, 771, 781, 791, 801, 811, 821, 831, 841, 851, 861, 871, 881 or 891 nm up to 651, 661, 671, 681, 691, 701, 711, 721, 731, 741, 751, 761, 771, 781, 791, 801, 811, 821, 831, 841, 851, 861, 871, 881, 891 or 901 nm. The average elongated nanoparticles 2D area of MM-POCM may thus be from 35 000, 40 000, 45 000, 50 000, 55 000, 60 000, 65 000, 70 000, 75 000 or 80 000 nm² up to 45 000, 50 000, 55 000, 60 000, 65 000, 70 000, 75 000, 80 000 or 84 000 nm². The number of elongated nanoparticles of MM-POCM per a 3.5 µm x 2.5 µm SEM micrograph may thus be from 20, 22, 24, 26, 28, 30, 32, 34, 36, 38, 40, 42, 44, 46, 48, 50, 52, 54, 56, 58 60, 62, 64, 66, 68, 70, 72, 74, 76, 78, 80, 82, 84, 86, 88, 90, 92, 94, 96, 98, 100, 102, 104, 106, 108, 110, 112, 114, 116, 118, 120, 122, 124, 126, 128, 130, 132, 134, 136, 138, 140, 142, 144, 146, 148, 150, 152, 154, 156, 158, 160, 162, 164, 168, 170, 172, 174, 176 or 178 up to 22, 24, 26, 28, 30, 32, 34, 36, 38, 40, 42, 44, 46, 48, 50, 52, 54, 56, 58 60, 62, 64, 66, 68, 70, 72, 74, 76, 78, 80, 82, 84, 86, 88, 90, 92, 94, 96, 98, 100, 102, 104, 106, 108, 110, 112, 114, 116, 118, 120, 122, 124, 126, 128, 130, 132, 134, 136, 138, 140, 142, 144, 146, 148, 150, 152, 154, 156, 158, 160, 162, 164, 168, 170, 172, 174, 176, 178 or 180. The dimensions of such elongated nanoparticles of MM-POCM in these ranges enable to increase the specific surface area of the MM-POMC and achieve surprisingly good results in improving the performance and stability of the anodes and cathodes in working conditions.

In an embodiment the morphology-modified perovskite oxide catalyst material may comprise round shaped nanoparticles and elongated nanoparticles; and wherein a ratio of the average elongated nanoparticle length to the average elongated nanoparticle width is 10-15, and a ratio of average round shape particle area and average elongated nanoparticles 2D area is between 2-4. The ratio of the average elongated nanoparticle length to the average elongated nanoparticle width may thus be from 10, 11, 12, 13 or 14 up to 12, 13, 14 or 15. The ratio of average round shape particle area and average elongated nanoparticles 2D area may thus be from 2 or 3 up to 3 or 4. Such ratios help to improve the performance and stability of the anodes and cathodes in working conditions.

In the embodiments, wherein the morphology-modified perovskite oxide catalyst material comprises round shaped nanoparticles, an average diameter of the round shaped nanoparticles may be 321-715 nm, an average round shape nanoparticle area may be 120 000 - 549 000 nm², and a number of round shaped nanoparticles per a 3.5 µm × 2.5 µm SEM micrograph may be 9-180.

The average diameter of the round shaped nanoparticles may thus be from 321, 331, 341, 351, 361, 371, 381, 391, 401, 411, 421, 431, 441, 451, 461, 471, 481, 491, 501, 511, 521, 531, 541, 551, 561, 571, 581, 591, 601, 611, 621, 631, 641, 651, 661, 671, 681, 691 or 701 nm up to 331, 341, 351, 361, 371, 381, 391, 401, 411, 421, 431, 441, 451, 461, 471, 481, 491, 501, 511, 521, 531, 541, 551, 561, 571, 581, 591, 601, 611, 621, 631, 641, 651, 661, 671, 681, 691, 701 or 715 nm. The average round shape nanoparticle area may thus be from 120 000, 130 000, 140 000, 150 000, 160 000, 170 000, 180 000, 190 000, 200 000, 210 000, 220 000, 230 000, 240 000, 250 000, 260 000, 270 000, 280 000, 290 000, 300 000, 310 000, 320 000, 330 000, 340 000, 350 000, 360 000, 370 000, 380 000, 390 000, 400 000, 410 000, 420 000, 430 000, 440 000, 450 000, 460 000, 460 000, 480 000, 490 000, 500 000, 510 000, 520 000, 530 000 or 540 000 nm² up to 130 000, 140 000, 150 000, 160 000, 170 000, 180 000, 190 000, 200 000, 210 000, 220 000, 230 000, 240 000, 250 000, 260 000, 270 000, 280 000, 290 000, 300 000, 310 000, 320 000, 330 000, 340 000, 350 000, 360 000, 370 000, 380 000, 390 000, 400 000, 410 000, 420 000, 430 000, 440 000, 450 000, 460 000, 460 000, 480 000, 490 000, 500 000, 510 000, 520 000, 530 000, 540 000 or 549 000 nm². The number of round shaped nanoparticles per a 3.5 µm x 2.5 µm SEM micrograph may thus be from 9, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170 or 175 up to 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175 or 180. The ranges of ratios and dimensions according to these embodiments enable to increase the specific surface area of the MM-POCM and improve the performance and stability of the anodes and cathodes in working conditions.

According to the embodiments of the morphology-modified perovskite oxide catalyst material, the specific surface area of the morphology-modified perovskite oxide catalyst material is higher than the specific surface area of the oxide catalyst material. The higher specific surface area improves the performance and stability of the anodes and cathodes in working conditions. The performance is improved by increasing the surface area on which catalytic reactions can occur on the material. Furthermore, higher surface area makes the electrode material relatively more robust towards poisoning, since in the event of local poisoning, there is still sufficient non-poisoned surface area left to carry out the desired reaction

In third aspect, an embodiment of the present disclosure provides an electrode comprising the morphology-modified perovskite oxide catalyst material according to any one of the embodiments of the present disclosure. The electrode comprising the morphology-modified perovskite oxide catalyst material with an increased specific surface area provides increased catalytic activity, better stability in electrochemical systems such as fuel cells or electrolysers. The electrodes comprising the morphology-modified perovskite oxide catalyst material with an increased specific surface area are especially advantageous for producing hydrogen via a Hydrogen Evolution Reaction (HER), for producing oxygen via a Oxygen Evolution Reaction (OER) or both in an alkaline water electrolyser or in a solid oxide steam electrolyser. The electrode material can be prepared e.g., by dispersing the morphology-modified perovskite oxide catalyst material on the surface of a secondary material, which ensures maximized electrochemically active surface area.

In fourth aspect, an embodiment of the present disclosure provides a use of the electrode comprising the morphology-modified perovskite oxide catalyst material according to any one of the embodiments of the present disclosure for producing hydrogen via a Hydrogen Evolution Reaction (HER) or oxygen via a Oxygen Evolution Reaction (OER) or both in an alkaline water electrolyser or in a solid oxide steam electrolyser. The embodiment further relates to an electrode for use in electrolysis, in particular, an electrode for use in oxygen generation which is suitably used in the electrolysis of water in alkaline conditions, and which exhibits a low overpotential towards oxygen evolution reaction.

In yet another embodiment, the present disclosure provides a use of the morphology-modified perovskite oxide catalyst material according to any one of the embodiments of the present disclosure as an electrode material or as a catalyst layer in an alkaline electrolyser, an anion exchange membrane electrolyser, a solid oxide electrolyser or a solid oxide fuel cell. Such a use improves significantly the performance and stability of the electrodes or catalyst layers in the alkaline electrolysers, in the anion exchange membrane electrolysers, in the solid oxide electrolysers and in the solid oxide fuel cells.

### EXAMPLES

The following examples illustrate the embodiments according to the present disclosure.

### EXAMPLE 1 (comparative example of perovskite oxide catalyst material (CE-POCM1))

To prepare a comparative example of material with a perovskite structure with the chemical composition of Pr_{0.95}CoO₃, corresponding stoichiometric amounts of Pr(NO₃)₃·xH₂O and Co(NO₃)₂·xH₂O were dissolved in water. A 5.5 molar equivalent of KOH was added to the mixture drop by drop while the solution was continuously stirred. The formed precipitate was washed on filter paper with water until a neutral pH of 7 was reached. The precipitate was collected by vacuum filtration method and dried overnight in air. The precipitate was ground into a fine powder using a ceramic mortar. The precipitate was heated in a muffle furnace at 800°C for 3h in the air to form a comparative example of perovskite oxide catalyst material (CE-POCM1).

The chemical composition of the CE-POCM1 was further analyzed using X-Ray Diffraction (XRD) techniques. X-ray diffraction analysis data was collected with an X-ray voltage of 40kV and a current of 40mA. The scanning speed was 5 degrees per minute; the scan-axis was 2 theta / theta, the scan rate was 10-70 deg, and the step with 0.02 deg. D/teX Ultra detector was used for the measurement with a K-beta filter. The corresponding results can be seen in figure FIG. 2. XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractogram did not exhibit any peaks that would suggest the appearance of a secondary phase, indicating that a phase pure material was obtained. The phase purity enables to improve the performance and stability of the material compared to phase impure material, since secondary phases can cause partial deactivation or inactivation of the material compared to the perovskite phase.

The elemental composition and the surface morphology of the comparative example of perovskite oxide catalyst material was further investigated using scanning electron microscopy with energy dispersive X-ray (SEM-EDX) techniques. The SEM images were obtained with an accelerating voltage of 4kV. The signal of secondary electrons was detected by the InLens detector. The corresponding results can be seen in figure FIG. 3a and Tables 1 and 2. SEM-EDX analysis identified that the material consists of Pr, Co, O, and K elements. The ratio of the metals according to SEM-EDX analysis was 0.92 Pr : 1 Co : 0.04 K. These results suggest that the obtained comparative example of material with a perovskite structure has an 8% deficiency on the A lattice site, indicating that the formula of the perovskite material is Pr_{0.92}CoO_{3-d}, where d refers to oxygen non-stoichiometry. The identification of K with SEM-EDX analysis is likely due to residual K incorporated into the comparative example of perovskite oxide catalyst material during the preparation process. From the SEM images, the morphology of round shape nanoparticles is revealed. On the 3.5 µm x 2.5 µm SEM micrograph the diameter of the round shape particles was measured (Table 2). In case the particle somewhat deviated from a perfect round shape, the longest diameter was registered. According to the employed methodology, the elongated nanoparticle 2D area was calculated by assuming a perfect round shape of the particle. Higher amount of round shape nanoparticles, lower average diameter of the round shape nanoparticles, and lower average round shape nanoparticle 2D area is preferred as this allows the same area of the material consist of more round shape nanoparticles, which increases the specific surface area of the CE-POCM1.

**Table 1. Elemental composition of the MM-POCMs according to SEM-EDX analysis.**

| Code of the material | Atomic weight percent of Pr | Atomic weight percent of Co | Atomic weight percent of O | Atomic weight percent of K | The ratio of metal atoms in the material |
|---|---|---|---|---|---|
| CE-POCM1 | 17.25 | 18.73 | 63.35 | 0.67 | 0.92 Pr : 1 Co : 0.04 K |
| MM-POCM1 | 14.66 | 15.37 | 63.80 | 6.17 | 0.96 Pr : 1 Co : 0.40 K |
| MM-POCM2 | 16.29 | 16.95 | 66.51 | 0.25 | 0.96 Pr : 1 Co : 0.01 K |
| MM-POCM3 | 18.44 | 20.72 | 60.84 | - | 0.89 Pr : 1 Co |
| MM-POCM4 | 17.16 | 18.63 | 63.85 | 0.36 | 0.92 Pr : 1 Co : 0.02 K |
| MM-POCM5 | 17.36 | 18.05 | 64.34 | 0.25 | 0.96 Pr : 1 Co : 0.01 K |
| MM-POCM6 | 17.98 | 18.94 | 62.92 | 0.25 | 0.95 Pr : 1 Co : 0.01 K |
| MM-POCM7 | 16.41 | 17.35 | 66.00 | 0.24 | 0.95 Pr : 1 Co : 0.01 K |
| CE-POCM3 | 14.48 | 15.57 | 69.38 | - | 0.93 Pr : 1 Co |
| MM-POCM10 | 18.26 | 18.96 | 62.79 | - | 0.96 Pr : 1 Co |

**Table 2. Round shape nanoparticle parameters and the number of elongated nanoparticles counted.**

| Code of the material | Number of round shape nanoparticles counted | Average diameter of a round shaped nanoparticle [nm] | Average round shape nanoparticle 2D area [nm²] | Number of elongated nanoparticles counted |
|---|---|---|---|---|
| CE-POCM1 | 86 | 375 | 136 000 | 0 |
| MM-POCM1 | 9 | 440 | 172 000 | 38 |
| MM-POCM2 | 36 | 347 | 150 000 | 68 |
| MM-POCM3 | 42 | 715 | 549 000 | 0 |
| MM-POCM4 | 78 | 408 | 143 000 | 49 |
| MM-POCM5 | 172 | 321 | 140 000 | 0 |
| MM-POCM6 | 105 | 341 | 120 000 | 32 |
| MM-POCM7 | 102 | 494 | 204 000 | 0 |
| CE-POCM3 | 106 | 204 | 36 000 | 0 |

### EXAMPLE 2

The EXAMPLE 2 illustrates treatment examples according to the present disclosure, where the treatment temperature is varied. The raw oxide catalyst material was prepared according to the experimental procedure described in in EXAMPLE 1.

KOH treatment: The raw oxide catalyst material was mixed with 30%_{wt} KOH solution in separate containers. The material was heated for 5 h at various temperatures, as noted in Table 3. The formed MM-POCMs were washed, dried, and ground as follows. The formed MM-POCM was washed with water until a neutral pH of 7 was reached. The MM-POCM was collected by vacuum filtration and dried in air for overnight. MM-POCM was ground into a fine powder with a ceramic mortar.

The chemical composition of the oxide catalyst materials was further analyzed using X-Ray Diffraction (XRD) techniques under the same conditions as described in Example 1. The corresponding results can be seen in Figure 2. XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractograms did not exhibit any peaks that would suggest the appearance of a secondary phase, indicating that a phase pure material was obtained. The elemental composition and the surface morphology of the oxide catalyst materials was further investigated using scanning electron microscopy with energy dispersive X-ray (SEM-EDX) techniques using the same conditions as described in Example 1.

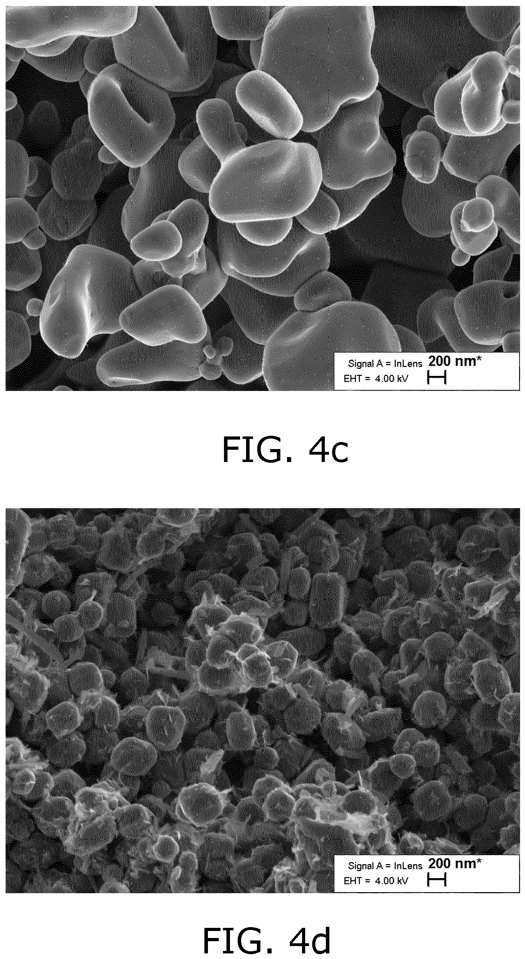

The corresponding results can be seen in figures FIG. 4b, FIG. 4d and Table 1, Table 2, and Table 4. SEM-EDX analysis identified that the materials MM-POCM2 and MM-POCM4 consist of Pr, Co, O, and K elements and material MM-POCM3 consists of Pr, Co and O elements. The ratio of the metals according to SEM-EDX analysis was 0.96 Pr : 1 Co : 0.01 K for material MM-POCM2, 0.89 Pr : 1 Co for material MM-POCM3, and 0.92 Pr : 1 Co : 0.02 K for material MM-POCM4. These results suggest that the raw oxide materials have a deficiency on the A lattice site, indicating that the formula of the perovskite is Pr_{0.96}CoO_{3-d} for MM-POCM2, Pr_{0.89}CoO_{3-d} for MM-POCM3, and Pr_{0.92}CoO_{3-d} for MM-POCM4. The identification of K with SEM-EDX analysis is likely due to residual K incorporated into the material during the synthesis or KOH treatment process.

From the SEM images, the morphology of round shape nanoparticles is revealed for all the materials mentioned within EXAMPLE 2. On the 3.5 µm x 2.5 µm SEM micrograph the diameter of the round shape particles was measured as described in EXAMPLE 1 (Table 2). The SEM images reveal that the morphology of MM-POCM3 sample is similar to the morphology of CE-POCM1 (EXAMPLE 1) material, which did not receive KOH treatment. Yet more round shape nanoparticles were counted for CE-POCM1 compared to MM-POCM3. In addition, the average diameter of a round shape nanoparticle was lower for CE-POCM1. This indicates that the KOH treatment at low temperatures (e.g., room temperature) increases the size of the round shape nanoparticles. Increase in particle size is not desired, as it lowers the specific surface area of the POCM, leading to decreased catalytic activity. In case of materials MM-POCM2, and MM-POCM4, the edges of the particles are not as well defined as in case of CE-POCM1 (EXAMPLE 1) and MM-POCM3. This effect was more extensive in case of MM-POCM4, indicating a higher degree of structural degradation of the elongated nanoparticle morphology of the material during the treatment. Materials MM-POCM2, and MM-POCM4 also presented elongated nanoparticles. The number of elongated nanoparticles counted from a 13.5 µm x 11.5 µm SEM micrograph of the material is mentioned in Table 4. Higher amount of elongated nanoparticles desired as this morphology modification increases the specific surface area of the MM-POCM and therefore increases the catalytic properties of the MM-POCM. More elongated nanoparticles were identified for MM-POCM2 material compared to the MM-POCM4 material. Parameters describing the elongated nanoparticles were measured from a 13.5 µm x 11.5 µm SEM micrograph of the material and are listed in Table 4. While measuring particle dimensions, the longest width and length of each elongated particle were employed. The approximate area of elongated nanoparticle was calculated by multiplying the width and the length of each elongated nanoparticle. Both the width and the length, as well as the average elongated nanoparticle 2D area of the elongated nanoparticles were higher for MM-POCM4 material. Lower elongated nanoparticle area is preferred as this would allow the material to consist of more elongated nanoparticles and thus lower elongated nanoparticle area would potentially improve the material by increasing the specific surface area of the material. The ratio of the average elongated nanoparticle length to the average elongated nanoparticle width was higher for MM-POCM2 material, indicating that the particles were more elongated for MM-POCM2 material. More elongated particles are preferred as this could indicate a higher specific surface area of the material. In addition, more elongated nanoparticles would be in contact with more round shape nanoparticles increasing the effects associated with the elongated nanoparticles. The ratio between the area of round shape nanoparticle and the area of elongated nanoparticle was calculated by dividing the average round shape nanoparticle area of the sample by the average elongated nanoparticle area of the sample. This parameter indicates how elongated nanoparticle on average would make up the area of a round shape nanoparticle. The ratio of average round shape particle area and average elongated nanoparticle 2D area was higher for MM-POCM2 material. Lower ratio of the area of a round shape nanoparticle to the area of an elongated nanoparticle is preferred as this would allow the same area of material to be made of more particles, thus improving the electrocatalytic properties of the material by increasing the specific surface area of the material. These results indicate that amongst the MM-POCMs studied in EXAMPLE 2, the KOH treatment conditions of MM-POCM2 are the most suitable for the growth of elongated nanoparticles. These results show that an optimal temperature for the KOH treatment is between room temperature and 95 degrees Celsius, for example 50 degrees Celsius.

**Table 3. KOH treatment parameters of EXAMPLE 2.**

| Code of the material | The concentration of the KOH solution used for the treatment | The temperature of the treatment | The time of the treatment |
|---|---|---|---|
| MM-POCM3 | 6.9M (30%_{Wt}) | Room temperature (≈20°C) | 5h |
| MM-POCM2 | 6.9M (30%_{wt}) | 80°C | 5h |
| MM-POCM4 | 6.9M (30%_{wt}) | 95°C | 5h |

**Table 4. The parameters of elongated nanoparticles (ENP).**

| Code of the material | Average width of an ENP [nm] | Average length of an ENP [nm] | Ratio of the average ENP length to the | Average ENP 2D area [nm²] | Ratio of average round shape particle area and |
|---|---|---|---|---|---|
| | | | average ENP width | | average ENP 2D area |
| MM-POCM1 | 77 | 849 | 11 | 69 000 | 2 |
| MM-POCM2 | 52 | 788 | 15 | 39 000 | 4 |
| MM-POCM4 | 87 | 900 | 10 | 84 000 | 2 |
| MM-POCM6 | 50 | 641 | 13 | 35 000 | 3 |

### EXAMPLE 3

The EXAMPLE 3 illustrates treatment examples according to the present disclosure, where the concentration of the alkaline treating solution is varied.

The raw oxide catalyst material was prepared according to the experimental procedure described in EXAMPLE 1.

KOH treatment: To study the effect of KOH concentration, the raw oxide catalyst material was mixed with various KOH solutions in separate containers. The KOH solution concentrations used for the KOH treatment are noted in Table 5. The treatment temperature and time were fixed at 80°C and 5h, respectively.

The formed MM-POCMs were washed, dried, and ground as follows. The formed MM-POCM was washed with water until a neutral pH of 7 was reached. The MM-POCM was collected by vacuum filtration and dried in air overnight. MM-POCM was ground into a fine powder in a ceramic mortar.

The chemical composition of the oxide catalyst materials was further analyzed using X-Ray Diffraction (XRD) techniques with the same conditions described as in EXAMPLE 1. The corresponding results can be seen in Figure 2. XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractograms did not exhibit any peaks that would suggest the appearance of a secondary phase, indicating that a phase pure material was obtained.

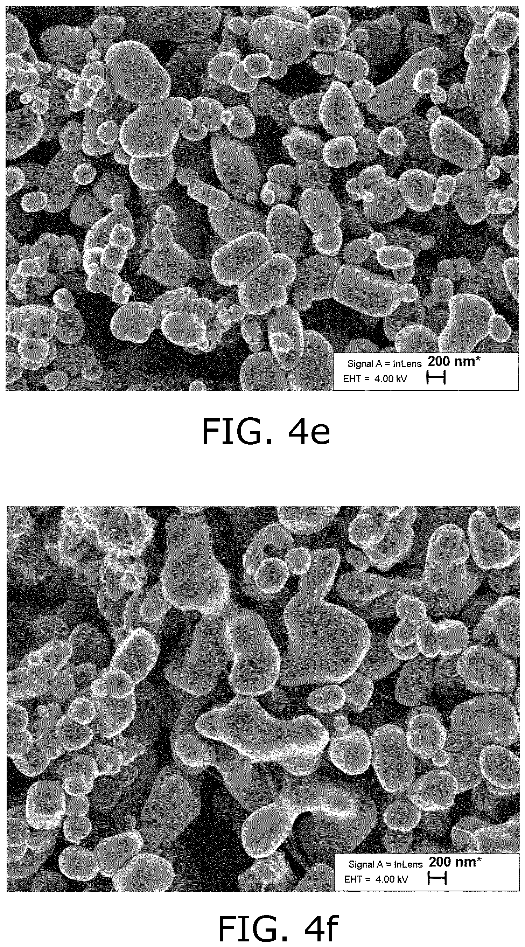

The elemental composition and the surface morphology of the oxide catalyst materials was further investigated using scanning electron microscopy with energy dispersive X-ray (SEM-EDX) techniques with the same conditions as described in Example 1. The corresponding results can be seen in figures FIG. 4b, FIG. 4e and FIG. 4f , Table 1, Table 2, and Table 4. SEM-EDX analysis identified that the materials consist of Pr, Co, O, and K elements. The ratio of the metals according to SEM-EDX analysis was 0.96 Pr : 1 Co : 0.01 K for materials MM-POCM2 and MM-POCM5. These results suggest that MM-POCM2 and MM-POCM5 materials have a 4% deficiency on the A lattice site, indicating that the formula of the perovskite is Pr_{0.96}CoO_{3-d}. For material MM-POCM6, the ratio of the metals according to SEM-EDX analysis was 0.95 Pr : 1 Co : 0.01 K. These results suggest that the MM-POCM6 material has a 5% deficiency on the A lattice site, indicating that the formula of the perovskite is Pr_{0.95}CoO_{3-d}. The identification of K with SEM-EDX analysis is likely due to residual K incorporated into the material during the preparation of the raw oxide or the KOH treatment process.

From the SEM images, the morphology of round shape nanoparticles is revealed for all the materials mentioned within EXAMPLE 3. On the 3.5 µm x 2.5 µm SEM micrograph the diameter of the round shape particles was measured as mentioned in EXAMPLE 1 (Table 2). The largest number of round shape nanoparticles were counted for material MM-POCM5, and MM-POCM6 materials compared to the CE-POCM1 (EXAMPLE 1) material, which did not receive KOH treatment. Compared to the CE-POCM1 material, the average round shape nanoparticle diameter was also lower for the morphology modified materials described in EXAMPLE 3. These results indicate that the KOH treatment can decrease the size of the nanoparticles. In addition, materials MM-POCM2, and MM-POCM6 presented elongated nanoparticles. The number of elongated nanoparticles counted from a 13.5 µm × 11.5 µm SEM micrograph of the material is mentioned in Table 4. More elongated nanoparticles were identified for MM-POCM2 material compared to the MM-POCM6 material. Parameters describing the elongated nanoparticles were measured from a 13.5 µm x 11.5 µm SEM micrograph of the material and are listed in Table 4. All parameters were determined as described in EXAMPLE 2. All of the parameters listed in Table 4 were in the same range for MM-POCM2 and MM-POCM6 materials with all parameters being slightly higher for MM-POCM2. These results demonstrate that the concentration of the KOH solution used during KOH treatment higher than 1 M can promote the formation of elongated nanoparticles.

**Table 5. KOH treatment parameters of EXAMPLE 3.**

| Code of the material | The concentration of the KOH solution used for the treatment | The temperature of the treatment | The time of the treatment |
|---|---|---|---|
| MM-POCM5 | 1M (5.35°10_{wt}) | 80°C | 5h |
| MM-POCM6 | 6M (26.8%_{wt}) | 80°C | 5h |
| MM-POCM2 | 6.9M (30%_{wt}) | 80°C | 5h |

### EXAMPLE 4

The EXAMPLE 4 illustrates treatment examples according to the present disclosure, where the treatment time is varied.

The raw oxide catalyst material was prepared according to the experimental procedure described in EXAMPLE 1.

KOH treatment: The effect of treatment time was studied. The raw oxide catalyst material was mixed with 30%_{wt} KOH solution in separate containers. The material was heated at the temperature of 80°C for various time periods noted in Table 6. The formed MM-POCMs were washed, dried, and ground as follows. The formed MM-POCM was washed with water until a neutral pH of 7 was reached. The MM-POCM was collected by vacuum filtration and dried in air for overnight. MM-POCM was ground into a fine powder with a ceramic mortar.

The chemical composition of the oxide catalyst materials was further analyzed using X-Ray Diffraction (XRD) techniques with the same conditions described in EXAMPLE 1. The corresponding results can be seen in Figure 2. XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractograms of MM-POCM2 and MM-POCM7 did not exhibit any peaks that would suggest the appearance of a secondary phase, indicating that a phase pure material was obtained. The diffractogram of MM-POCM1 included small additional peaks at 2 theta values of 27.5°, and 40°, which could indicate the appearance of a secondary phase. Phase purity was estimated to be 94%, 100%, and 100% for MM-POCM1, MM-POCM2, and MM-POCM7, respectively.

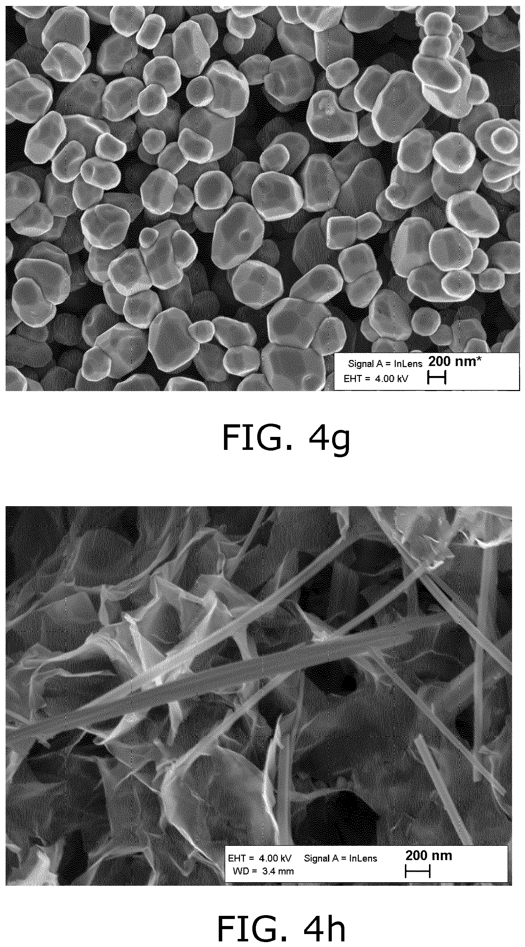

The elemental composition and the surface morphology of the oxide catalyst materials were further investigated using scanning electron microscopy with energy dispersive X-ray (SEM-EDX) techniques with the same conditions described in EXAMPLE 1. The corresponding results can be seen in figures Fig. 4a, Fig. 4b and Fig. 4g and Table 1. SEM-EDX analysis identified that the materials consist of Pr, Co, O, and K elements. The ratio of the metals according to SEM-EDX analysis was 0.96 Pr : 1 Co : 0.01 K for material MM-POCM2. These results suggest that the prepared material has a 4% deficiency in the A lattice site, indicating that the formula of the perovskite material is Pr_{0.96}CoO_{3-d}. For material MM-POCM1, the ratio of the metals according to SEM-EDX analysis was 0.95 Pr : 1 Co : 0.4 K and for material MM-POCM7 0.95 Pr : 1 Co : 0.01 K. These results suggest that MM-POCM1 and MM-POCM7 materials have a 5% deficiency on the A lattice site, indicating that the formula of the perovskite is Pr_{0.95}CoO_{3-d}. The identification of K with SEM-EDX analysis is likely due to residual K incorporated into the material during the preparation of the raw oxide or KOH treatment process.

From the SEM images, the morphology of round shape nanoparticles is revealed for materials MM-POCM2 and MM-POCM7. Material MM-POCM1 only exhibited a few round shape nanoparticles indicating the degradation of the elongated nanoparticle morphology during the KOH treatment. This suggests that the KOH treatment over a longer period of time (e.g. 100h) degrades the elongated nanoparticle morphology of the oxide catalyst material. On the 3.5 µm x 2.5 µm SEM micrograph, the diameter of the round shape particles was measured as mentioned in EXAMPLE 1 (Table 2). More round shape nanoparticles were identified for the MM-POCM7 material compared to the CE-POCM1 (EXAMPLE 1) material, which did not receive KOH treatment. Yet the average nanoparticle diameter of the round shape nanoparticles was lower for CE-POCM1 sample. Elongated nanoparticles were identified in the 13.5 µm x 11.5 µm SEM micrographs of MM-POCM1 and MM-POCM2 samples, and a larger number of elongated nanoparticles were counted for MM-POCM2. Parameters describing the elongated nanoparticles were measured from a 13.5 µm x 11.5 µm SEM micrograph of the material and are listed in Table 4. All parameters were determined as described in EXAMPLE 2. Whereas the average width, length, 2D area of the elongated nanoparticles were higher for MM-POCM1, the ratio of the average elongated nanoparticle length to the average elongated nanoparticle width, and the ratio of average round shape particle area and average elongated nanoparticle 2D area were higher for MM-POCM2 material. Taking into the account the high extent of microstructural degradation of MM-POCM1 sample, these results indicate that the KOH treatment conditions of MM-POCM2 material were the most suitable for promoting elongated nanoparticle formation without the degradation of the round shape particle morphology. These results show that an optimal time period for the KOH treatment is between 0.02 and 100 hours at 80 degrees Celsius, for example 5 hours.

**Table 6. KOH treatment parameters of EXAMPLE 4.**

| Code of the material | The concentration of the KOH solution used for the treatment | The temperature of the treatment | The time of the treatment |
|---|---|---|---|
| MM-POCM7 | 6.9M (30%_{wt}) | 80°C | 0.02h |
| MM-POCM2 | 6.9M (30%_{wt}) | 80°C | 5h |
| MM-POCM1 | 6.9M (30%_{wt}) | 80°C | 100h |

### EXAMPLE 5

A raw oxide catalyst material, referred to as comparative example of perovskite oxide catalyst material (CE-POCM2) was used as the starting material. CE-POCM2 had a composition of Pr_{0.95}CoO₃. KOH treatment was done to CE-POCM2 by mixing the material with 30%_{wt} KOH solution and heated at 50°C for 1h. During the heating, one sample was sonicated in an ultrasonic bath, to enhance the mixing of the KOH and the oxide catalyst material throughout the treatment; the resulting material is referred to a MM-POCM9. Another sample received no ultrasonic mixing during KOH treatment; the resulting material is referred to as MM-POCM8. The formed MM-POCMs were collected, washed, dried and ground as follows. The formed MM-POCM was washed with ultrapure water until a neutral pH of 7 was reached. The MM-POCM was collected by vacuum filtration and dried in air overnight. Subsequently, MM-POCM was ground into a fine powder with a ceramic mortar.

The specific surface area of the samples was characterized by nitrogen adsorption analysis preformed using a KELVIN 1042 Sorptiometer. The sample was degassed at 300°C for 90 min. Multipoint surface area measurement was conducted using N₂ as the adsorbing gas and He as the carrier gas. The specific surface area according to Brunauer-Emmet-Teller (BET) theory was calculated for each sample and is given in Table 7. It is clear that the KOH treatment increases the specific surface are of the material, whereas higher specific surface area is achieved with ultrasonic mixing during the treatment.

**Table 7. KOH treatment parameters of EXAMPLE 5.**

| Code of the material | The concentration of the KOH solution used for the treatment | The temperat ure of the treatment | The time of the treat ment | Ultrason ic mixing | BET surface area [m²/g] |
|---|---|---|---|---|---|
| CE-POCM2 | - | - | - | - | 5.66 |
| MM-POCM8 | 6.9M (30%_{wt}) | 50°C | 1h | No | 7.18 |
| MM-POCM9 | 6.9M (30%_{wt}) | 50°C | 1h | Yes | 11.08 |

### EXAMPLE 6 (comparative example)

To prepare a raw oxide material with a perovskite structure with the chemical composition of Pr_{0.95}CoO₃, corresponding stoichiometric amounts of Pr(NO₃)₃·xH₂O and Co(NO₃)₂·xH₂O together with glycine were dissolved in ultrapure water. The solution was heated at 110°C until a viscous gel was formed. The gel was heated to 300°C to initiate an intense reaction. The resulting material was ground into a fine powder using a ceramic mortar. The formed material was subsequently heat-treated in a muffle furnace at 800°C for 3h in air to form a raw oxide catalyst material. This material is referred to as the comparative example of perovskite oxide catalyst material (CE-POCM3).

The chemical composition of the oxide catalyst material was further analyzed using X-Ray Diffraction (XRD) techniques with the same conditions described in EXAMPLE 1 (Table 2). XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractogram did not exhibit any peaks that would suggest the appearance of a secondary phase, indicating that a phase pure material was obtained.

The elemental composition and the surface morphology of CE-POCM3 was further investigated using scanning electron microscopy with energy dispersive X-ray (SEM-EDX) techniques under the same conditions as described in EXAMPLE 1. The corresponding results can be seen in Figure 3b and Table 1, Table 2, and Table 4. SEM-EDX analysis identified that the material consists of Pr, Co, and O elements. The ratio of the metals according to SEM-EDX analysis was 0.93 Pr : 1 Co. These results suggest that the prepared material has a 7% deficiency on the A lattice site, indicating that the formula of the perovskite material is Pr_{0.93}CoO₃. The SEM images reveal a morphology of round shape nanoparticles. From the SEM images, the morphology of round shape nanoparticles is revealed for CE-POCM3 material. On the 3.5 µm x 2.5 µm SEM micrograph the diameter of the round shape particles was measured as described in EXAMPLE 1 (Table 2).

The oxide catalyst material was used without further treatment for rotating disk electrode measurements. More specifically, 6.5 mg of oxide catalyst material powder, 20.7 mg of Nafion solution (5.5 wt%), and isopropanol and ultrapure water as solvents were mixed to obtain a slurry. The slurry was placed in an ultrasonic bath for 15 min. 9 microliters of the slurry was deposited using an automatic pipette onto a pre-polished glassy carbon electrode and dried at 40 degrees Celsius in the presence of isopropanol vapors. The estimated electrode loading was 0.2 mg/cm². The electrode was tested in a three-electrode setup rotating disk electrode system with a potentiostat and Nova software. Measurements were conducted in a glass measurement cell previously washed with 80°C H₂SO₄ and H₂O₂ and thoroughly rinsed with demineralized and ultrapure water. The cell was filled with 0.1M KOH electrolyte solution and saturated with Ar. A large surface area platinum net was used as the counter electrode, and a reversible hydrogen electrode (RHE) as the reference electrode. Electrochemical impedance spectroscopy (EIS) measurements were conducted at 0.45 V, logarithmically changing the alternating current frequency from 0.1 Hz to 10 000 Hz with an amplitude of 10 mVᵣₘₛ. The oxygen evolution reaction (OER) was studied with cyclic voltammetry (CV) method by applying linearly changing potential to the rotating disk electrode and measuring the corresponding currents. During the measurements the potential was linearly swept from 1.3 V to 1.9 V and then back to 1.3 V with the scanning rate of 5 mV s⁻¹; each such back-and-forth sweep is referred to as a measurement cycle. 10 measurement cycles were performed during each measurement. The stability of the materials was evaluated by studying the difference between the 1^{st} and the 10^{th} measurement cycle (FIG. 5). The ohmic resistance of the solution calculated from electrochemical impedance spectroscopy data was used for potential compensation during cyclic voltammetry (CV) measurements. FIG. 5 illustrates the OER CV measurement results by noting the potential at which the current density value of 10 mA cm⁻² was achieved during the 1^{st} and the 10^{th} measurement cycle. CE-POCM3 material showed activity towards catalyzing the OER reaction, reaching the current density value of 10 mA cm⁻² at a potential of 1.77V vs. RHE during the 1^{st} measurement cycle and 1.80V vs. RHE during the 10^{th} measurement cycle.

### EXAMPLE 7

The raw oxide catalyst material was prepared according to the experimental procedure described in EXAMPLE 6.

KOH treatment: The raw oxide catalyst material was mixed with 30%wt KOH solution and heated at 85°C for 112h. The formed morphology-modified perovskite oxide catalyst material (MM-POCM10) was washed with ultrapure until a neutral pH of 7 was reached. The KOH-treated oxide catalyst material was collected by vacuum filtration and dried in air overnight. KOH-treated oxide catalyst material was ground into a fine powder with a ceramic mortar.

The chemical composition of the oxide catalyst material was further analyzed using X-Ray Diffraction (XRD) techniques with the same conditions described in EXAMPLE 1. The corresponding results can be seen in Figure 2. XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. The diffractogram did not exhibit any peaks that would suggest the appearance of a secondary phase, indicating that a phase pure material was obtained.

The elemental composition and the surface morphology of MM-POCM10 was further investigated using scanning electron microscopy with energy dispersive X-ray (SEM-EDX) techniques with the same conditions described in EXAMPLE 1. The corresponding results can be seen in Figure 4h and Table 1, Table 2 and Table 4. SEM-EDX analysis identified that the material consists of Pr, Co, and O elements. The ratio of the metals according to SEM-EDX analysis was 0.96 Pr : 1 Co. These results suggest that the prepared material has a 4% deficiency in the A lattice site, indicating that the formula of the perovskite material is Pr_{0.96}CoO₃.

The SEM micrographs revealed a morphology of irregularly shaped sheets and elongated nanoparticles. No round shape nanoparticles were identified. While comparing the morphology of MM-POCM10 to the morphology of CE-POCM3 (EXAMPLE 6), which did not receive any KOH treatment, a clear difference can be seen demonstrating that morphology of irregularly shaped sheets and elongated nanoparticles can be achived with the KOH treatment. 30 elongated nanoparticles were identified on a 13.5 µm x 11.5 µm SEM micrograph of the material. The average width of the elongated nanoparticles was 112 nm and the average length of the elongated nanoparticles was 1858 nm. The approximate area of elongated nanoparticle was calculated by multiplying the width and the length of each elongated nanoparticle. The average value of the approximate area of the elongated nanoparticle was 180 000 nm².

MM-POCM10 material was used without further treatment for rotating disk electrode measurements. The electrode was prepared, and the measurement conditions of the rotating disk electrode measurements were the same as described in EXAMPLE 6. FIG. 5 illustrates the OER CV measurement results by noting the potential at which the current density value of 10 mA cm⁻² was achieved during the 1^{st} and the 10^{th} measurement cycle. The material showed good activity as a catalyst for the OER reaction, reaching the current density value of 10 mA cm⁻² at the potential of 1.75V vs. RHE during the 1^{st} measurement cycle and 1.76V vs. RHE during the 10^{th} measurement cycle. MM-POCM10 material reached the current density value of 10 mA cm⁻² at lower potentials compared to CE-POCM3 material that was prepared using the same fabrication method, but which did not undergo the KOH treatment (EXAMPLE 6). The corresponding potentials were lower after both the 1^{st} and the 10^{th} measurement cycle. In addition, the electrochemical performance of KOH-treated material MM-POCM10 degraded less (i.e., the potential increased less between 1^{st} and 10^{th} measurement cycles) compared to CE-POCM3.

The morphology-modified perovskite oxide catalyst materials (MM-POCMs) according to the embodiments of the present disclosure enables to improve the properties of the electrode materials.

One of the parameters that can be used to describe the MM-POCMs is the number of round shape nanoparticles counted on a 3.5 µm x 2.5 µm SEM micrograph. The more nanoparticles that the material comprises, the higher specific surface area is the material expected to have. While in case of most materials over 30 round shape nanoparticles could be found on the micrograph, in case of MM-POCM1 the micrograph presented highly degraded nanoparticle structure. Due to this a significantly lower amount of round shaped nanoparticles was found. No round shape nanoparticles were identified for MM-POCM10. The material with the highest count of round shape nanoparticles was MM-POCM5, followed by MM-POCM3, CE-POCM6, and MM-POCM7.

On the 3.5 µm × 2.5 µm SEM micrograph, the diameter of the round shape particles was measured. In case the particle somewhat derived from a perfect round shape, the longest diameter was registered. Lower average diameter of the round shape nanoparticles is preferred as this would allow the same area of the material consist of more round shape nanoparticles, which would increase the specific surface area of the material. The material with lowest average diameter of the round shape nanoparticles was for CE-POCM3, followed by MM-POCM5, MM-POCM6, MM-POCM2, and CE-POCM1.

The approximate area of a round shape particle was calculated by assuming that the particle has an area of a perfect circle. Lower round shape particle area is preferred as this would allow the same area of the material consist of more nanoparticles, which would potentially improve the material by increasing the specific surface area of the material. The average round shape nanoparticle area was the lowest for CE-POCM3, followed by MM-POCM6, CE_POCM1, MM-POCM5, MM-POCM4, and MM-POCM2.

Another parameter that can be used to describe the effect of the KOH treatment is the number of elongated nanoparticles counted on a 13.5 µm x 11.5 µm SEM micrograph of the material after the KOH treatment. This would indicate that the KOH treatment of MM-POCM2 was done with the most appropriate conditions, followed by MM-POCM4. Nearly the same number of elongated nanoparticles was found on the SEM micrograph of MM-POCM6 as MM-POCM1. The lowest number of elongated nanoparticles were identified for MM-POCM10.

Comparing the ratio of the average elongated nanoparticle length and average elongated nanoparticle width we can see that MM-POCM10 gives the most elongated nanoparticles, followed by MM-POCM2, MM-POCM6, MM-POCM1 and MM-POCM4. More elongated nanoparticles are preferred as this could indicate a higher specific surface area of the material. In addition, more elongated particles would be in contact with more round shape nanoparticles increasing the effects associated with the nanoparticles.

The approximate area of elongated nanoparticles was calculated by multiplying the width and the length of each elongated nanoparticle. The average elongated nanoparticle area was the highest for MM-POCM10 indicating that the material has the biggest elongated nanoparticles. The material was followed by MM-POCM4, MM-POCM1, MM-POCM2 and MM-POCM6 with the elongated nanoparticle area being most similar for the last two samples. Lower elongated nanoparticle area is preferred as this would allow the material to consist of more elongated nanoparticles and thus lower elongated nanoparticle area would potentially improve the material by increasing the specific surface area of the material.

The ratio between the area of a round shape nanoparticle and the area of a elongated nanoparticle was calculated by dividing the average round shape nanoparticle area of the sample by the average elongated nanoparticle area of the sample. This parameter indicates how elongated nanoparticles on average would make up the area of a round shape nanoparticle. Higher ratio between the area of a round shape nanoparticle and the area of an elongated nanoparticle is preferred as this would allow the same area of material to be made of more particle thus potentially improving the material by increasing the specific surface area of the material. The ratio between the area of a round shape nanoparticle and the area of an elongated nanoparticle was the highest for MM-POCM2, followed by MM-POCM6. MM-POCM1 and MM-POCM2 had the lowest values. The parameters of the elongated nanoparticles obtained according to the method of the present disclosure are summarised in Table 8.

**Table 8. Parameters of the elongated nanoparticles**

| Parameter | Idea | Preferred value | Materials within the preferred values | Materials outside the preferred values |
|---|---|---|---|---|
| Number of round shaped particles counted on a 3.5 µm × 2.5 µm SEM micrograph | The more the better | 30- 180 | The rest of the materials | MM-POCM1, MM-POCM10 |
| Average diameter of a round shaped nanoparticle | The lower the better | 200 nm - 500 nm | The rest of the materials | MM-POCM3 |
| Number of elongated nanoparticles counted on a 13.5 µm × 11.5 µm SEM micrograph | The higher the better | Over 30 | MM-POCM1, MM-POCM2, MM-POCM4, MM-POCM6, MM-POCM10 | The rest of the materials |
| Average elongated nanoparticle length / average elongated nanoparticle width | The higher the better. | Over 13 | MM-POCM2, MM-POCM6, MM-POCM10 | The rest of the materials |
| Average round shape nanoparticle area | The lower the better | Under 150 000 nm² | CE-POCM1, MM-POCM2, MM-POCM4, MM-POCM5, MM-POCM6 | The rest of the materials |
| Average elongated nanoparticle area | The lower the better | Under 50 000 nm² | MM-POCM2, MM-POCM6 | The rest of the materials |
| Average round shape particle area / average elongated nanoparticle area | The higher the value the better. | Over 3 | MM-POCM2, MM-POCM6 | The rest of the materials |

### DETAILED DESCRIPTION OF THE DRAWINGS

Referring to FIG. 1, an embodiment of the method for treating an oxide catalyst material with a perovskite structure according to the present disclosure is shown. The method comprises at step **S1** preparing a treatment container **110** comprising the raw oxide catalyst material with the perovskite structure **010** and an alkaline treating solution **020,** at step **S2** performing a hydrothermal treatment of the oxide catalyst material with the perovskite structure in the alkaline treating solution **210,** at step **S3** obtaining a morphology-modified perovskite oxide catalyst material **310.**

Referring to FIG. 2, X-Ray Diffraction (XRD) diffractograms illustrating the analysis of the crystallographic phase composition of the comparative example of perovskite oxide catalyst materials (CE-POCMs) and morphology-modified perovskite oxide catalyst materials (MM-POCMs) according to the present disclosure are shown.

Diffractogram number 1 shows the analysis of an example CE-POCM1. Diffractogram number 2 shows the analysis of an example MM-POCM1. The diffractogram of MM-POCM1 included small additional peaks 2 theta values of 27.5°, and 40°, which could indicate the appearance of a secondary phase. Diffractogram number 3 shows the analysis of an example MM-POCM2. Diffractogram number 4 shows the analysis of an example MM-POCM3. Diffractogram number 5 shows the analysis of an example MM-POCM4. Diffractogram number 6 shows the analysis of an example MM-POCM5. Diffractogram number 7 shows the analysis of an example MM-POCM6. Diffractogram number 8 shows the analysis of an example MM-POCM7. Diffractogram number 9 shows the analysis of an example CE-POCM3. Diffractogram number 10 shows the analysis of an example MM-POCM10.

X-ray diffraction analysis data were collected with an X-ray voltage of 40 kV and a current of 40 mA. The scanning speed was 5 degrees per minute; the scan-axis was 2 theta / theta, the scan rate was 10-70 deg, and the step with 0.02 deg. D/teX Ultra detector was used for the measurement with a K-beta filter.

XRD analysis of the materials identified a diffractogram attributable to PrCoO₃ material with the main peak at 2 theta value of 33.5° and peaks at 2 theta values of 23.5°, 26.5°, 29°, 33.5°, 36°, 41.5°, 48°, 50°, 54°, 56°, and 60°. Except for MM-POCM1, the diffractograms did not exhibit any peaks that would suggest the appearance of a secondary phase, indicating that a phase pure material was obtained.

Referring to FIG. 3, the surface morphology of the comparative example of perovskite oxide catalyst materials (CE-POCMs) is shown, as measured using scanning electron microscopy (SEM). FIG. 3a shows the surface morphology of CE-POCM1. Fig. 3b shows the surface morphology of CE-POCM3. From the SEM images, the morphology of round shape nanoparticles is revealed. On the 3.5 µm x 2.5 µm SEM micrograph, the diameter of the round shape particles was measured (Table 1). In case the particle somewhat deviated from a perfect round shape, the longest diameter was registered. According to this the nanoparticle 2D area was calculated by assuming a perfect round shape of the particle. Higher amount of round shape nanoparticles, lower average diameter of the round shape nanoparticles and lower average round shape nanoparticle 2D area is preferred as this allows the same area of the material consist of more round shape nanoparticles, which increases the specific surface area of the POCM.

Referring to Figures FIG. 4a - FIG. 4h, the surface morphologies of morphology-modified perovskite oxide catalyst materials (MM-POCMs) according to the present disclosure are shown, as measured using SEM. FIG. 4a shows the surface morphology of MM-POCM1. FIG. 4b shows the surface morphology of MM-POCM2. FIG. 4c shows the surface morphology of MM-POCM3. FIG. 4d shows the surface morphology of MM-POCM4. FIG. 4e shows the surface morphology of MM-POCM5. FIG. 4f shows the surface morphology of MM-POCM6. FIG. 4g shows the surface morphology of MM-POCM7. FIG. 4h shows the surface morphology of MM-POCM10. The diameters of the round nanoparticles shown on the SEM images range from 100 nm to 1000 nm. The SEM images are labelled with scale bars 200 nm.

Material MM-POCM1 only exhibited a few round shape nanoparticles indicating the degradation of the nanoparticle morphology during the KOH treatment. The morphology of round shape nanoparticles is revealed for materials MM-POCM2 the morphology of round shape nanoparticles is revealed for materials MM-POCM7.

Figure FIG. 5 illustrates the OER activity and stability of CE-POCM3 and MM-POCM10 materials under identical conditions in a rotating disk measurement setup. The black bars correspond to the electrode potential that was required to achieve a current density value of 10 mA cm⁻² during the 1^{st} measurement cycle, whereas the grey bars correspond to the electrode potential that was required to achieve a current density value of 10 mA cm⁻² during the 10^{th} measurement cycle. Series number 1 corresponds to CE-POCM3. Series number 2 corresponds to MM-POCM10. Experimental details are provided in EXAMPLE 6.
shows the electrode potential of CE-POCM3 and MM-POCM10 under identical conditions after 1^{st} and 10^{th} measurement cycle, as measured by rotating disk electrode measurements. The bar no. 1 illustrates the electrode potential of CE-POCM3 and the bar no. 2 illustrates the electrode potential of MM-POCM10. CE-POCM3 showed catalytic activity towards the OER reaction, reaching the current density value of 10 mA cm⁻² at the potential of 1.77 V vs. RHE during the 1^{st} measurement cycle and 1.80 V vs. RHE during the 10^{th} measurement cycle. MM-POCM10 showed improved activity and stability as a catalyst for the OER reaction reaching the current density value of 10 mA cm⁻² at the potential of 1.75 V vs. RHE during the 1^{st} measurement cycle and 1.76 V vs. RHE during the 10^{th} measurement cycle. The error bars in FIG. 5 indicate the standard deviation of the measurements based on at least 2 independent measurements.

## Claims

1. A method for treating a raw oxide catalyst material with a perovskite (010) structure, the method comprises
- preparing a treatment container (110) comprising the oxide catalyst material with the perovskite structure and an alkaline treating solution (020), wherein a concentration of the alkaline treating solution is 5-45 wt%;
- performing in the treatment container a hydrothermal treatment of the oxide catalyst material with the perovskite structure in the alkaline treating solution (210) at a temperature of 20-95 degrees Celsius for 0.02-112 hours;
- obtaining a morphology-modified perovskite oxide catalyst material (310).

2. The method according to claim 1, wherein the hydrothermal treatment comprises heating the treatment container (110) at a temperature of at least 85 degrees by Celsius, whereby the pressure inside the container reaches at least 1.01 atm.

3. The method according to claim 1 or 2, wherein heating is carried out for 3-8 hours.

4. The method according to any of the preceding claims, wherein the alkaline treating solution (020) is a KOH solution in water or a NaOH solution in water.

5. The method according to any of the preceding claims, wherein the oxide catalyst material with perovskite structure (010) comprises at least one rare-earth metal on an A-site of the perovskite structure and at least one transition metal on a B-site of the perovskite structure.

6. The method according to claim 5, wherein the rare-earth metal is lanthanum or praseodymium and the transition metal is nickel or cobalt or the transition metal is nickel and cobalt.

7. The method according to any of the preceding claims, wherein the hydrothermal treatment comprises agitating the oxide catalyst material with the perovskite structure (010) in the alkaline treating solution (020) with ultrasound.

8. The method according to any of the preceding claims, wherein a mass ratio of the oxide catalyst material with perovskite structure (010) and the alkaline treating solution (020) is between 1:8 and 3:5.

9. The method according to any of the preceding claims, wherein performing the hydrothermal treatment in the treatment container (110) comprises performing the hydrothermal treatment inside an alkaline electrolysis cell, on an electrode for an alkaline electrolyser or in an alkaline electrolysis stack.

10. A morphology-modified perovskite oxide catalyst material, wherein the morphology-modified perovskite oxide catalyst material comprises elongated nanoparticles; and wherein
an average width of elongated nanoparticles is 52-77 nm,
an average length of elongated nanoparticles is 641-901 nm,
an average elongated nanoparticles 2D area is 35 000 - 84 000 nm2.

11. A morphology-modified perovskite oxide catalyst material, wherein the morphology-modified perovskite oxide catalyst material comprises round shaped nanoparticles and elongated nanoparticles; and wherein
a ratio of the average elongated nanoparticle length to the average elongated nanoparticle width is 10-15, and
a ratio of average round shape particle area and average elongated nanoparticles 2D area is between 2-4.

12. A morphology-modified perovskite oxide catalyst material, wherein the specific surface area of the morphology-modified perovskite oxide catalyst material is higher than the specific surface area of the oxide catalyst material.

13. An electrode comprising the morphology-modified perovskite oxide catalyst material according any one of claims 10-12.

14. A use of the electrode comprising the morphology-modified perovskite oxide catalyst material according any one of claims 10-12 for producing hydrogen via Hydrogen Evolution Reaction or oxygen via Oxygen Evolution Reaction or for both in an alkaline water electrolyser or in a solid oxide steam electrolyser.

15. A use of the morphology-modified perovskite oxide catalyst material according any one of claims 10-12 as an electrode material or as a catalyst layer in an alkaline electrolyser, an anion exchange membrane electrolyser, a solid oxide electrolyser or a solid oxide fuel cell.

## Amended claims

### Amended claims in accordance with Rule 137(2) EPC.

1. A method for treating a raw oxide catalyst material with a perovskite (010) structure, the method comprises
- preparing a treatment container (110) comprising the oxide catalyst material with the perovskite structure **characterised by** AₓBO₃ with x in the range of 0.6 to 1, and an alkaline treating solution (020), wherein a concentration of the alkaline treating solution is 5.5-45wt%;
- performing in the treatment container a hydrothermal treatment of the oxide catalyst material with the perovskite structure in the alkaline treating solution (210) at a temperature of 30-95 degrees Celsius for 0.02-112 hours, wherein the pressure inside the container reaches at least 1.01 atm;
- obtaining a morphology-modified perovskite oxide catalyst material (310).

2. The method according to claim 1, wherein heating at a temperature of at least 85 degrees by Celsius is carried out for 3-8 hours.

3. The method according to any of the preceding claims, wherein the alkaline treating solution (020) is a KOH solution in water or a NaOH solution in water.

4. The method according to any of the preceding claims, wherein the oxide catalyst material with perovskite structure (010) comprises at least one rare-earth metal on an A-site of the perovskite structure and at least one transition metal on a B-site of the perovskite structure.

5. The method according to claim 4, wherein the rare-earth metal is lanthanum or praseodymium and the transition metal is nickel or cobalt or the transition metal is nickel and cobalt.

6. The method according to any of the preceding claims, wherein the hydrothermal treatment comprises agitating the oxide catalyst material with the perovskite structure (010) in the alkaline treating solution (020) with ultrasound.

7. The method according to any of the preceding claims, wherein a mass ratio of the oxide catalyst material with perovskite structure (010) and the alkaline treating solution (020) is between 1:8 and 3:5.

8. The method according to any of the preceding claims, wherein performing the hydrothermal treatment in the treatment container (110) comprises performing the hydrothermal treatment inside an alkaline electrolysis cell, on an electrode for an alkaline electrolyser or in an alkaline electrolysis stack.

9. The method according to any of the preceding claims, wherein the specific surface area of the morphology-modified perovskite oxide catalyst material is higher than the specific surface area of the oxide catalyst material, wherein the surface area is measured using nitrogen adsorption analysis.

10. A morphology-modified perovskite oxide catalyst material, wherein the morphology-modified perovskite oxide catalyst material comprises elongated nanoparticles measured using scanning electron microscopy (SEM); and wherein
an average width of elongated nanoparticles is 52-77 nm,
an average length of elongated nanoparticles is 641-901 nm,
an average elongated nanoparticles 2D area is 35 000 - 84 000 nm2.

11. A morphology-modified perovskite oxide catalyst material, wherein the morphology-modified perovskite oxide catalyst material comprises round shaped nanoparticles and elongated nanoparticles when measured using scanning electron microscopy (SEM); and wherein
a ratio of the average elongated nanoparticle length to the average elongated nanoparticle width is 10-15, and
a ratio of average round shape particle area and average elongated nanoparticles 2D area is between 2-4.

12. An electrode comprising the morphology-modified perovskite oxide catalyst material according any one of claims 10-11.

13. A use of the electrode comprising the morphology-modified perovskite oxide catalyst material according any one of claims 10-11 for producing hydrogen via Hydrogen Evolution Reaction or oxygen via Oxygen Evolution Reaction or for both in an alkaline water electrolyser or in a solid oxide steam electrolyser.

14. A use of the morphology-modified perovskite oxide catalyst material according any one of claims 10-11 as an electrode material or as a catalyst layer in an alkaline electrolyser, an anion exchange membrane electrolyser, a solid oxide electrolyser or a solid oxide fuel cell.
